# EUROPÄISCHE PATENTSCHRIFT

(11) **EP 3 978 281 B1**
(45) Veröffentlichungstag und Bekanntmachung des Hinweises auf die Patenterteilung: **07.05.2025**
(21) Anmeldenummer: 21195420.1
(22) Anmeldetag: 08.09.2021
(51) Int. Cl.: B60H 1/22, H01M 8/04014, B60H 1/14, B60H 1/00, B60L 1/00, B60L 1/08, B60L 3/00, B60L 50/70, B60L 50/72, B60L 58/33, B61D 27/00, H01M 8/04029, H01M 8/04082, H01M 8/1007

(54) **FAHRZEUG MIT KATALYTISCHEM BRENNER ZUR KLIMATISIERUNG EINES FAHRGASTRAUMS**
VEHICLE WITH CATALYTIC BURNER FOR AIR CONDITIONING A PASSENGER COMPARTMENT
VÉHICULE POURVU DE BRULEUR CATALYTIQUE DESTINÉ À LA CLIMATISATION D'UN HABITACLE

(30) Priorität: 30.09.2020 DE 102020212393
(43) Veröffentlichungstag der Anmeldung: 06.04.2022
(73) Patentinhaber: Siemens Mobility GmbH, 81739 München (DE)
(72) Erfinder: Hartl, Johannes, 47441 Moers (DE); Ruckes, Jonas, 91058 Erlangen (DE)
(74) Vertreter: Siemens Patent Attorneys

(56) Entgegenhaltungen:
- EP-A2- 1 465 274
- EP-A2- 1 906 108
- WO-A1-2007/117229
- WO-A1-2011/048734
- CN-B- 109 291 830

## Beschreibung

Die Erfindung betrifft ein Fahrzeug mit einem Fahrgastraum und einer Klimaanlage zur Klimatisierung des Fahrgastraums.

DE 199 31 061 A1 offenbart ein gattungsgemäßes, brennstoffzellenbetriebenes Fahrzeug mit katalytischem Brenner, der zum Beheizen von Brennstoffzellen ausgebildet ist. Der katalytische Brenner kann dazu mit Brennstoff aus einem Teilstrom des Brennstoffs für die Brennstoffzelle betrieben werden und er kann als Zusatz- oder Standheizung für eine Fahrgastzelle des Fahrzeugs genutzt werden.

CN 109 291 830 B lehrt ein Fahrzeug mit einem Brennstoffzellensystem und einem katalytischen Brenner zur Wasserstoffverbrennung, welcher mit Wärmetauchern zur Erwärmung eines Passagierraums wärmleitend verbunden ist, gemäß dem Oberbegriff des unabhängigen Patentanspruchs 1.

WO 2011/048734 A1, EP 1 465 274 A2, WO 2007/117229 A1 und EP 1 906 108 A2 betreffen weitere Brennstoffzellensysteme.

Der Erfindung liegt die Aufgabe zugrunde, ein Fahrzeug mit effizienter Heizung anzugeben.

Gelöst wird die Aufgabe durch den Gegenstand des unabhängigen Patentanspruchs 1. Weiterbildungen und Ausgestaltungen der Erfindung finden sich in den Merkmalen der abhängigen Patentansprüche wieder.

Ein erfindungsgemäßes Fahrzeug, beispielsweise ein Land-, Wasser- oder Luftfahrzeug, insbesondere ein großräumiges Fahrzeug wie ein Bus oder ein Schienenfahrzeug, umfasst einen Fahrgastraum und eine Klimaanlage zur Klimatisierung des Fahrgastraums. Darüber hinaus umfasst die Klimaanlage einen Brenner, insbesondere einen katalytischen Brenner, zur, insbesondere katalytischen, Verbrennung eines Brenngases zur ausschließlichen Erwärmung eines Luftstroms für den Fahrgastraum. Der Brenner ist erfindungsgemäß frei von Verbindungen mit einem Kühlmittelstrom für eine Brennstoffzelle des Fahrzeugs zur Übertragung von thermischer Energie, insbesondere Wärme, des Brenners auf den Kühlmittelstrom. Gemäß einer vorteilhaften Weiterbildung ist der Brenner als katalytischer Brenner ausgestaltet. Er kann der Erwärmung des Luftstroms für den Fahrgastraum im Stand des Fahrzeugs dienen und somit Teil einer Standheizung sein.

Das Fahrzeug umfasst fürderhin einen elektrischen Antrieb und ein Brennstoffzellensystem zur Versorgung des elektrischen Antriebs mit Energie, wobei das Brennstoffzellensystem wenigstens eine Brennstoffzelle umfasst. Darüber hinaus umfasst das Fahrzeug einen Brenngastank zur Speicherung von Brenngas für die Brennstoffzelle. Bei dem Brenngas kann es sich um Wasserstoff handeln. Der Brenngastank ist mit dem Brenner der Klimaanlage, insbesondere mittels brenngasführender Rohrleitungen, verbunden, so dass Brenngas aus dem Brenngastank dem, insbesondere katalytischen, Brenner zur, insbesondere katalytischen, Verbrennung im Brenner zugeleitet werden kann.

Darüber hinaus weist die Klimaanlage eine erste Steuerungseinheit zur Regelung oder Steuerung des Luftstroms für den Fahrgastraum auf. Sie ist zusätzlich geeignet ausgebildet zur Steuerung der Verbrennung im, insbesondere katalytischen, Brenner. Sie kann entsprechend auch zur Regelung oder Steuerung der Zuführung an Brenngas aus dem Brenngastank zum Brenner eingerichtet sein.

Das Brennstoffzellensystem weist eine zweite Steuerungseinheit auf. Die erste und die zweite Steuerungseinheit sind voneinander verschieden. Die erste Steuerungseinheit der Klimaanlage ist dann ausgebildet zur Regelung oder Steuerung der Verbrennung an Brenngas im Brenner und gegebenenfalls zur entsprechenden Regelung oder Steuerung der Zuführung an Brenngas aus dem Brenngastank zum Brenner unabhängig vom Betrieb der Brennstoffzelle; weitergebildet auch unabhängig von der Regelung oder Steuerung des Brennstoffzellensystems durch die zweite Steuerungseinheit, insbesondere zumindest unabhängig vom Betrieb und von der Regelung oder Steuerung des Kühlmittelstroms für die Brennstoffzelle durch die zweite Steuerungseinheit des Brennstoffzellensystems.

Die Regelung oder Steuerung von Klimaanlage und Brennstoffzellensystem sind somit getrennt voneinander und unabhängig voneinander.

Bei dem Fahrzeug handelt es sich weitergebildet um ein Fahrzeug des Personenverkehrs, insbesondere ist es ein Schienenfahrzeug. Der Fahrgastraum ist ein Innenraum des Fahrzeugs im Inneren eines Wagenkastens des Fahrzeugs zum Aufenthalt von Fahrgästen.

Klimaanlagen, auch HVAC abgekürzt (für englisch "Heating, Ventilation and Air Conditioning"), sind Anlagen der Luft- und Klimatechnik zur Erzeugung und Aufrechterhaltung einer vorgegebenen Qualität der Raumluft des Fahrgastraums hinsichtlich Temperatur, Feuchtigkeit, etc., insbesondere unabhängig vom Umgebungsbedingungen, wie z.B. vom Wetter. Die Klimaanlage des Fahrzeugs dient dazu, die Luft des Fahrgastraums in einen vorgegebenen Zustand zu versetzen. Dazu ist sie ausgebildet, Luft aufzuheizen und/oder abzukühlen, zu befeuchten und/oder zu trocknen sowie gegebenenfalls Luft zu filtern oder auszutauschen und dazu insbesondere lokale Luftströmungen zu erzeugen oder zu beeinflussen. Zur Erwärmung der Luft des Fahrgastraums kann der Luftstrom für den Fahrgastraum mittels des Brenners erwärmt werden.

Dazu kann die Klimaanlage des Fahrzeugs weitergebildet einen geeignet ausgebildeten, ersten Wärmetauscher zur, insbesondere unmittelbaren, Übertragung der Wärme aus der, insbesondere katalytischen, Verbrennung des Brenngases im, insbesondere katalytischen, Brenner auf den Luftstrom für den Fahrgastraum aufweisen. Der erste Wärmetauscher ist dann seinerseits frei von Verbindungen zum Kühlmittelstrom für die Brennstoffzelle des Fahrzeugs zur Übertragung von Wärme auf den Kühlmittelstrom. In einer Ausführungsform ist der Brenner, der erste Wärmetauscher und der Luftstrom für den Fahrgastraum frei von jeglicher Verbindung mit dem Kühlmittelstrom für die Brennstoffzelle des Fahrzeugs. Der erste Wärmetauscher der Klimaanlage ist zur Übertragung der Wärme aus der katalytischen Verbrennung auf den Luftstrom für den Fahrgastraum entsprechend mit Leitungen zur Führung der Abwärme, beispielsweise eines Abgasstroms, des Brenners und Leitungen zur Führung des Luftstroms für den Fahrgastraum verbunden.

Gemäß einer weiteren Weiterbildung ist die Klimaanlage frei von weiteren, insbesondere elektrischen, Heizelementen zur Erwärmung des Luftstroms für den Fahrgastraum.

Der Brenner dient somit ausschließlich der Erwärmung der Raumluft des Fahrgastraums und nicht zur Erwärmung einer Brennstoffzelle des Fahrzeugs. Er ist ausschließlich der Klimaanlage zugeordnet und separat von einer Brennstoffzelle im Fahrzeug angeordnet. Mit dem Brenner erzeugte Wärme wird nicht auf das Kühlmittel der Brennstoffzelle übertragen.

Zumindest der, insbesondere katalytische, Brenner der Klimaanlage, insbesondere die gesamte Klimaanlage, ist getrennt von dem Brennstoffzellensystem im Fahrzeug angeordnet. Zusätzlich ist zumindest der, insbesondere katalytische, Brenner der Klimaanlage, insbesondere aber die gesamte Klimaanlage des Fahrzeugs, unabhängig vom Brennstoffzellensystem des Fahrzeugs betreibbar ausgebildet.

Vorteilhaft ist der Anschluss des Brenners an den Brenngastank für die Brennstoffzelle zur Versorgung des Brenners mit Brenngas aus dem Brenngastank für die Brennstoffzelle.

Eine weitere Weiterbildung der erfindungsgemäßen Lösung ist darin zu sehen, dass die wenigstens eine Brennstoffzelle des Brennstoffzellensystems im Dachbereich eines Wagenkastens des Fahrzeugs angeordnet ist. Auch die Klimaanlage kann im Dachbereich eines Wagenkastens des Fahrzeugs angeordnet sein. Jedoch separat von dem Brennstoffzellensystem.

Nach einer weiteren Weiterbildung kann das Brennstoffzellensystem frei von einem Brenner oder von Heizelementen zur Erwärmung des Kühlmittelstrom für die Brennstoffzelle des Fahrzeugs sein. Die Brennstoffzelle des Fahrzeugs wird somit nicht vorgeheizt. Der Brenner der Klimaanlage ist nicht mit dem Kühlmittelstrom der Brennstoffzelle in der Weise zur Übertragung von Wärme des Brenners auf den Kühlmittelstrom gekoppelt.

Zusätzlich kann das Fahrzeug einen zweiten Wärmetauscher zur Übertragung von Wärme des Kühlmittelstroms der Brennstoffzelle auf den Luftstrom für den Fahrgastraum aufweisen. Der zweite Wärmetauscher ist dann weiterbildungsgemäß stromaufwärts des ersten Wärmetauschers im Luftstrom für den Fahrgastraum angeordnet. Die Abwärme der Brennstoffzelle kann so zusätzlich zur Erwärmung des Luftstroms für den Fahrgastraum genutzt werden. Über den zweiten Wärmetauscher wird keine Abwärme des Brenners auf den Kühlmittelstroms der Brennstoffzelle übertragen. Erster und zweiter Wärmetauscher sind nicht identisch.

Weist das Fahrzeug einen zweiten Wärmetauscher zur Übertragung von Wärme des Kühlmittelstroms der Brennstoffzelle auf den Luftstrom für den Fahrgastraum auf, ist die erste Steuerungseinheit der Klimaanlage geeignet ausgebildet zur Regelung oder Steuerung der Übertragung von Wärme des Kühlmittelstroms der Brennstoffzelle auf den Luftstrom für den Fahrgastraum.

Wie oben bereits ausgeführt ist der erste Wärmetauscher - und damit auch der ihm zugeordnete, insbesondere katalytische, Brenner - stromabwärts des zweiten Wärmetauschers im Luftstrom für den Fahrgastraum angeordnet. Die Regelung oder Steuerung der, insbesondere katalytischen, Verbrennung im Brenner kann abhängig von der Temperatur des Luftstroms für den Fahrgastraum nach dem zweiten Wärmetauscher erfolgen. Sie ist damit nicht unabhängig vom Zustand des Brennstoffzellensystems. Ist die Brennstoffzelle außer Betrieb würde keine Abwärme der Brennstoffzelle auf den Luftstrom für den Fahrgastraum erfolgen. Wird der Luftstrom für den Fahrgastraum jedoch durch die Abwärme der Brennstoffzelle bereits erwärmt, kann die Erwärmung durch den Brenner verringert werden.

Neben der Abhängigkeit von der Temperatur des Luftstroms für den Fahrgastraum nach dem zweiten Wärmetauscher kann die Regelung der Verbrennung im Brenner auch abhängig von einer aktuellen Ist-Temperatur und abhängig von einer vorgegebenen Soll-Temperatur der Raumluft im Fahrgastraum des Fahrzeugs und/oder abhängig von einem Füllstand oder Druck an Brenngas im Brenngastank erfolgen.

Dennoch gilt die Regelung oder Steuerung des Brenners als unabhängig vom Betrieb und von der Regelung oder Steuerung des Brennstoffzellensystems, insbesondere unabhängig vom Betrieb und von der Regelung oder Steuerung des Kühlmittelstroms der Brennstoffzelle. Klimaanlage und Brennstoffzelle sind daher unabhängig voneinander betreibbar und entsprechend jeweils ausgebildet.

Zum Beheizen des Fahrgastraums ist der Betrieb der Brennstoffzelle nicht erforderlich. Auch die Nutzung von Strom aus Batterien zur Wärmeerzeugung mittels elektrischer Heizelemente sind gemäß der Erfindung nicht notwendig. Die zum Beheizen des Fahrgastraums notwendige Wärme wird einfach und effizient vom, insbesondere katalytischen, Brenner der Klimaanlage erzeugt, der mittels Brenngases aus dem Brenngastank für die Brennstoffzelle gespeist werden kann.

Die Wärmeerzeugung in einem katalytischen Brenner ist effizienter als die Wärmeerzeugung über die Brennstoffzelle und viel effizienter als die Nutzung von Energie aus Traktionsbatterien, die ihrerseits die Energie nur aus Rekuperation und der Brennstoffzelle erhalten. Zudem bedeutet ein Aufheizen des Fahrzeugs mittels Brennstoffzelle einen längeren Betrieb und damit höhere Alterung der Brennstoffzelle. Mit einem katalytischen Brenner
kann zudem eine höhere Temperatur erzeugt werden, was eine effizientere Heizung bedeutet. Das System kann auch zur Temperaturerhaltung im Wartebetrieb genutzt werden.

Die Erfindung lässt zahlreiche Ausführungsformen zu. Sie wird anhand der nachfolgenden Figuren näher erläutert, in denen jeweils ein Ausgestaltungsbeispiel dargestellt ist. Gleiche Elemente in den Figuren sind mit gleichen Bezugszeichen versehen.
- Fig. 1: zeigt schematisch eine erste Ausführungsform der Erfindung,
- Fig. 2: zeigt schematisch eine weitere Ausführungsform der Erfindung.

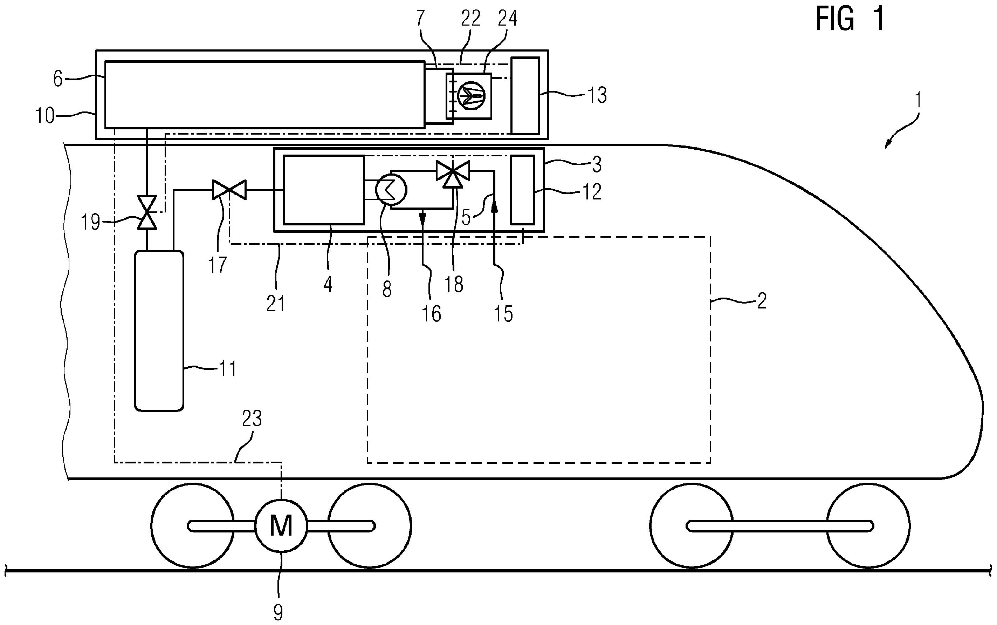

In Fig. 1 ist ein Schienenfahrzeug 1 des Personenverkehrs mit einem Fahrgastraum 2 und einer Klimaanlage 3 zur Klimatisierung des Fahrgastraums 2 schematisch dargestellt. Die Klimatisierung des Fahrgastraums erfolgt über einen Luftstrom 5 für den Fahrgastraum.

Luft wird aus dem Fahrgastraum 2 abgeführt und an die Umgebung des Fahrzeugs 1 abgegeben und/oder teilweise der Klimaanlage 3 zugeführt. Zusätzlich kann Luft aus der Umgebung des Fahrzeugs 1 der Klimaanlage 3 und anschließend dem Fahrgastraum 2 zugeführt werden. Der Einfachheit halber ist nur der Luftstrom 5 skizziert, der bei 15 zunächst aus dem Fahrgastraum 2 abgesaugt und an Position 16 klimatisiert, insbesondere erwärmt, wieder dem Fahrgastraum 2 zugeführt wird.

Zur Erwärmung des Luftstroms 5 für den Fahrgastraum 2, also dem Luftstrom, der dem Fahrgastraum 2 zugeführt wird, umfasst die Klimaanlage 3 einen katalytischen Brenner 4. Die Abwärme des Brenners 4 wird in einem ersten Wärmetauscher 8 auf den Luftstrom 5 für den Fahrgastraum des Fahrzeugs 2 übertragen.

Der katalytische Brenner 4 ist dazu mit einem Brenngastank 11 über brenngasführende Rohrleitungen und ein Ventil 17 verbunden, welches den Zustrom an Brenngas aus dem Brenngastank 11 in den Brenner 4 regelt. Das Ventil 17 wird durch eine erste Steuerungseinheit 12 der Klimaanlage 3 gesteuert.

Die Regelung des Brenners 4 und damit der Wärmeübertragung über den ersten Wärmetauscher 8, beispielsweise durch Regelung des Luftstroms 5 durch den ersten Wärmetauscher 8 über ein weiteres, erstes Ventil 18, erfolgt ebenfalls durch die erste Steuerungseinheit 12 der Klimaanlage 3. Das Ventil 18 ist als Byepassventil ausgebildet, um erwärmte Luft mit kalter Luft zu mischen.

Die erste Steuerungseinheit 12 ist dabei über entsprechende Signalleitungen 21 mit den genannten Komponenten verbunden. Sie kann auch mit Temperaturfühlern, Feuchtigkeitssensoren und weiteren Sensoren und Aktoren verbunden sein, welche hier der Übersichtlichkeit wegen nicht dargestellt sind. Auch weitere Komponenten der Klimaanlage 3, wie z.B. Kompressoren, Befeuchter, Drosseln etc. zur weiteren Beeinflussung der Luft des Luftstroms 5 für den Fahrgastraum 2 sind hier nicht näher erläutert.

Darüber hinaus umfasst das Schienenfahrzeug 1 ein Brennstoffzellensystem 10 in einem Container auf dem Dach des Schienenfahrzeugs 1, getrennt von der Klimaanlage 3. Dieses Brennstoffzellensystem 10 umfasst wenigstens eine Brennstoffzelle 6 sowie einen Kühlmittelkreislauf 7 zur Kühlung der Brennstoffzelle 6. Die Brennstoffzelle ist über brenngasführende Rohrleitungen und ein weiteres Ventil 19 mit dem Brenngastank 11 verbunden. Durch das Ventil 19 wird der Zustrom an Brenngas zur Brennstoffzelle 6 geregelt. Gesteuert wird das Ventil 19 durch eine zweite Steuerungseinheit 13 des Brennstoffzellensystems 10, welche über Signalleitungen 22 zumindest mit der Brennstoffzelle 6, dem Ventil 19 sowie mit einem weiteren Wärmetauscher 24 verbunden ist. Der Wärmetauscher 24 ist in einem Kühlmittelstrom 7 zur Kühlung der Brennstoffzelle 6 angeordnet und gibt überschüssige Wärme an die Umgebung des Schienenfahrzeugs 1 an.

In dieser Ausführungsform ist der Brenner 4 frei von einer Verbindung zu dem Kühlmittelstrom 7 der Brennstoffzelle 6 des Fahrzeugs 1.

Das Schienenfahrzeug 1 ist elektrisch angetrieben. Der Antrieb 9 wird mittels Energie aus der Brennstoffzelle 6 gespeist, welche über die elektrische Leitung 23 miteinander verbunden sind.

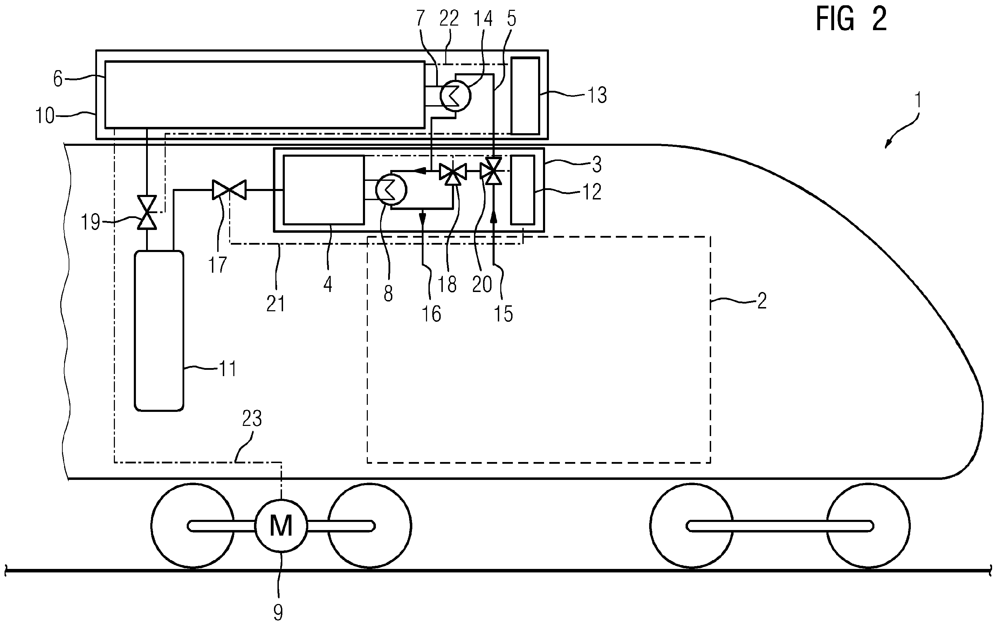

Fig. 2 veranschaulicht nun eine weitere Ausführungsform eines erfindungsgemäßen Schienenfahrzeugs 1. Wie in Fig. 1 wird Wärme vom Brenner 4 auf den Luftstrom 5 für den Fahrgastraum 2 über einen ersten Wärmetauscher 8 übertragen.

Darüber hinaus kann Abwärme der Brennstoffzelle 6, hier über einen weiteren, vom ersten Wärmetauscher 8 verschiedenen, zweiten Wärmetauscher 14, auf den Luftstrom 5 für den Fahrgastraum 2 des Schienenfahrzeugs 1 übertragen werden. Dies geschieht stromaufwärts des Brenners 4 und stromaufwärts des ersten Wärmetauschers 8. Die Steuerung der Wärmeübertragung, beispielsweise durch Steuerung eines weiteren, zweiten Ventils 20, erfolgt ebenfalls durch die erste Steuerungseinheit 12 der Klimaanlage 3, und zwar unabhängig von der Steuerung der Brennstoffzelle 6 durch eine zweite Steuerungseinheit 13.

Auch hier wird zunächst durch einen von der ersten Steuerungseinheit 12 gesteuerten Lüfter bei Position 15 Luft aus der Umgebung des Schienenfahrzeugs und/oder aus dem Innenraum, insbesondere aus dem Fahrgastraum 2, des Schienenfahrzeugs 1 angesaugt. Der Luftstrom 5 für den Fahrgastraum 2 wird zuerst über den zweiten Wärmetauscher 14 und dann erst zur Klimaanlage 3 und zum ersten Wärmetauscher 8 der Klimaanlage 3 geführt. Auch in dieser Ausgestaltung findet keine Übertragung von Abwärme des Brenners 4 auf die Brennstoffzelle 6, insbesondere auf das Kühlmittel im Kühlmittelstrom 7 der Brennstoffzelle 6, statt. Der Brenner 4 dient der ausschließlichen Erwärmung des Luftstroms 5 für den Fahrgastraum 2. Er ist frei von einer Verbindung zum Kühlmittelstrom 7 der Brennstoffzelle 6 zur Übertragung von Wärme des Brenners 4 auf den Kühlmittelstrom 7.

## Patentansprüche

1. Fahrzeug (1) mit einem Fahrgastraum (2) und einer Klimaanlage (3) zur Klimatisierung des Fahrgastraums, wobei die Klimaanlage (3) einen Brenner (4) zur Verbrennung eines Brenngases zur ausschließlichen Erwärmung eines Luftstroms (5) für den Fahrgastraum (2) umfasst, und der Brenner (4) frei von einer Verbindung zu einem Kühlmittelstrom (7) für eine Brennstoffzelle (6) des Fahrzeugs (1) zur Übertragung von Wärme des Brenners (4) auf den Kühlmittelstrom (7) ist, wobei das Fahrzeug (1) einen elektrischen Antrieb (9) und ein Brennstoffzellensystem (10) umfassend wenigstens eine Brennstoffzelle (6) zur Versorgung des elektrischen Antriebs (9) mit Energie aufweist,
**dadurch gekennzeichnet,**
**dass** das Fahrzeug (1) einen Brenngastank (11) mit Brenngas für die Brennstoffzelle (6) umfasst, wobei der Brenner (4) der Klimaanlage (3) mit dem Brenngastank (11) zur Zuführung von Brenngas aus dem Brenngastank (11) zum Brenner (4) der Klimaanlage (3) verbunden ist, wobei die Klimaanlage (3) eine erste Steuerungseinheit (12) und das Brennstoffzellensystem eine zweite Steuerungseinheit (13) aufweist, wobei die erste Steuerungseinheit (12) der Klimaanlage ausgebildet ist zur Regelung oder zur Steuerung des Luftstroms (5) für den Fahrgastraum (2) und zur Regelung oder zur Steuerung der Verbrennung im Brenner (4) unabhängig vom Betrieb des Brennstoffzellensystems (10).

2. Fahrzeug nach Anspruch 1,
**dadurch gekennzeichnet,**
**dass** der Brenner (4) der Klimaanlage (3) ein katalytischer Brenner ist.

3. Fahrzeug nach einem der Ansprüche 1 oder 2,
**dadurch gekennzeichnet,**
**dass** die Klimaanlage (3) einen ersten Wärmetauscher (8) zur Übertragung der Wärme aus der Verbrennung des Brenngases im Brenner (4) auf den Luftstrom (5) für den Fahrgastraum (2) aufweist.

4. Fahrzeug nach einem der Ansprüche 1 bis 3,
**dadurch gekennzeichnet,**
**dass** das Brennstoffzellensystem (10) frei von einem Brenner zur Erwärmung des Kühlmittelstroms (7) für die Brennstoffzelle (6) des Fahrzeugs (1) ist.

5. Fahrzeug nach einem der Ansprüche 1 bis 4,
**dadurch gekennzeichnet,**
**dass** zumindest der Brenner (4) der Klimaanlage (3) getrennt von dem Brennstoffzellensystem (10) im Fahrzeug (1) angeordnet und unabhängig betreibbar ausgebildet ist.

6. Fahrzeug nach Anspruch 3,
**dadurch gekennzeichnet,**
**dass** das Fahrzeug (1) einen zweiten Wärmetauscher (14) zur Übertragung von Wärme des Kühlmittelstroms (5) der Brennstoffzelle (6) auf den Luftstrom (5) für den Fahrgastraum (2) aufweist, wobei der erste Wärmetauscher (8) stromabwärts des zweiten Wärmetauschers (14) im Luftstrom (5) für den Fahrgastraum (2) angeordnet ist.

7. Fahrzeug nach einem der Ansprüche 1 bis 6,
**dadurch gekennzeichnet,**
**dass** die Klimaanlage (3) frei von weiteren Heizelementen zur Erwärmung des Luftstroms (5) für den Fahrgastraum (2) ist.

## Claims

1. Vehicle (1) with a passenger compartment (2) and an air conditioning system (3) for air conditioning of the passenger compartment, wherein the air conditioning system (3) comprises a burner (4) for burning a combustion gas for exclusively heating an air flow (5) for the passenger compartment (2), and the burner (4) is free of a connection to a coolant flow (7) for a fuel cell (6) of the vehicle (1) for transferring heat of the burner (4) to the coolant flow (7), wherein the vehicle (1) has an electrical drive (9) and a fuel cell system (10) comprising at least one fuel cell (6) for supplying the electrical drive (9) with energy,
**characterised in that**
the vehicle (1) comprises a combustion gas tank (11) with combustion gas for the fuel cell (6), wherein the burner (4) of the air conditioning system (3) is connected to the combustion gas tank (11) for feeding combustion gas out from the combustion gas tank (11) and to the burner (4) of the air conditioning system (3), wherein the air conditioning system (3) has a first control unit (12) and the fuel cell system has a second control unit (13), wherein the first control unit (12) of the air conditioning system is embodied for the closed-loop or open-loop control of the air flow (5) for the passenger compartment (2) and for the closed-loop or open-loop control of the combustion in the burner (4) independently of the operation of the fuel cell system (10).

2. Vehicle according to claim 1,
**characterised in that**
the burner (4) of the air conditioning system (3) is a catalytic burner.

3. Vehicle according to one of claims 1 or 2,
**characterised in that**
the air conditioning system (3) has a first heat exchanger (8) for transferring the heat from the combustion of the combustion gas in the burner (4) to the air flow (5) for the passenger compartment (2).

4. Vehicle according to one of claims 1 to 3,
**characterised in that**
the fuel cell system (10) is free of a burner for heating the coolant flow (7) for the fuel cell (6) of the vehicle (1).

5. Vehicle according to one of claims 1 to 4,
**characterised in that**
at least the burner (4) of the air conditioning system (3) is arranged separately from the fuel cell system (10) in the vehicle (1) and is embodied such that it can be operated independently.

6. Vehicle according to claim 3,
**characterised in that**
the vehicle (1) has a second heat exchanger (14) for transferring heat of the coolant flow (5) of the fuel cell (6) to the air flow (5) for the passenger compartment (2), wherein the first heat exchanger (8) is arranged downstream of the second heat exchanger (14) in the air flow (5) for the passenger compartment (2).

7. Vehicle according to one of claims 1 to 6,
**characterised in that**
the air condition system (3) is free of further heating elements for heating the air flow (5) for the passenger compartment (2).

## Revendications

1. Véhicule (1) comprenant un habitacle (2) et une installation (3) de conditionnement d'air pour le conditionnement de l'habitacle, dans lequel l'installation (3) de conditionnement d'air comprend un brûleur (4) pour la combustion d'un gaz combustible afin de réchauffer exclusivement un courant (5) d'air pour l'habitacle (2) et le brûleur (4) est exempt d'une liaison à un courant (7) de fluide de refroidissement pour une pile (6) à combustible du véhicule (1) pour la transmission de chaleur du brûleur (4) au courant (7) de fluide de refroidissement, dans lequel le véhicule (1) a un entraînement (9) électrique et un système (10) de pile à combustible comprenant au moins une pile (6) à combustible pour l'alimentation de l'entraînement (9) électrique en énergie,
**caractérisé**
**en ce que** le véhicule (1) comprend un réservoir (11) de gaz combustible ayant du gaz combustible pour la pile (6) à combustible, dans lequel le brûleur (4) de l'installation (3) de conditionnement d'air communique avec le réservoir (11) de gaz combustible pour l'envoi de gaz combustible du réservoir (11) de gaz combustible au brûleur (4) de l'installation (3) de conditionnement d'air, dans lequel l'installation (3) de conditionnement d'air a une première unité (12) de commande et le système de pile à combustible, une deuxième unité (13) de commande, dans lequel la première unité (12) de commande de l'installation de conditionnement d'air est constituée pour la régulation ou pour la commande du courant (5) d'air pour l'habitacle (2) et pour la régulation ou la commande de la combustion dans le brûleur (4) indépendamment du fonctionnement du système (10) de pile à combustible.

2. Véhicule suivant la revendication 1,
**caractérisé**
**en ce que** le brûleur (4) de l'installation (3) de conditionnement d'air est un brûleur catalytique.

3. Véhicule suivant l'une des revendications 1 ou 2,
**caractérisé**
**en ce que** l'installation (3) de conditionnement d'air a un premier échangeur de chaleur (8) pour la transmission de la chaleur de la combustion du gaz combustible, du brûleur (4) au courant (5) d'air pour l'habitacle (2).

4. Véhicule suivant l'une des revendications 1 à 3,
**caractérisé**
**en ce que** le système (10) de pile à combustible est exempt d'un brûleur pour chauffer le courant (7) de fluide de refroidissement pour la pile (6) à combustible du véhicule (1).

5. Véhicule suivant l'une des revendications 1 à 4,
**caractérisé**
**en ce qu'**au moins le brûleur (4) de l'installation (3) de conditionnement d'air est disposé dans le véhicule (1) de manière séparée du système (10) de pile à combustible et constitué de manière à pouvoir fonctionner indépendamment.

6. Véhicule suivant la revendication 3,
**caractérisé**
**en ce que** le véhicule (1) a un deuxième échangeur de chaleur (14) pour la transmission de la chaleur du courant (5) de fluide de refroidissement de la pile (6) à combustible au courant (5) d'air pour l'habitacle (2), dans lequel le premier échangeur de chaleur (8) est monté en aval du deuxième échangeur de chaleur (14) dans le courant (5) d'air pour l'habitacle (2).

7. Véhicule suivant l'une des revendications 1 à 6,
**caractérisé**
**en ce que** l'installation (3) de conditionnement d'air n'a pas d'autre élément de chauffage pour le chauffage du courant (5) d'air pour l'habitacle (2).
